# EUROPÄISCHE PATENTSCHRIFT

(11) **EP 1 137 724 B1**
(45) Veröffentlichungstag und Bekanntmachung des Hinweises auf die Patenterteilung: **13.07.2005**
(21) Anmeldenummer: 99971439.7
(22) Anmeldetag: 28.10.1999
(51) Int. Cl.: C09D 5/03

(54) **VERWENDUNG VON POLYETHYLENWACHSEN**
USE OF POLYETHYLENE WAXES
UTILISATION DES CIRES DE POLYETHYLENE

(30) Priorität: 31.10.1998 DE 19850211
(43) Veröffentlichungstag der Anmeldung: 04.10.2001
(73) Patentinhaber: BASF Coatings AG, 48165 Münster (DE)
(72) Erfinder: RIESTENPATT, Helmut, D-48165 Münster (DE); BOYSEN, Rolf, D-48163 Münster (DE); PERDUN, Birgit, D-59387 Ascheberg (DE)
(74) Vertreter: Fitzner, Uwe, Dr.
(86) Internationale Anmeldenummer: PCT/EP1999/008183
(87) Internationale Veröffentlichungsnummer: WO 2000/026307

(56) Entgegenhaltungen:
- WO-A-94/11446
- DE-C- 19 522 475
- FR-A- 2 235 988
- US-A- 3 872 040

## Beschreibung

Die Erfindung betrifft einen neuen Pulverlack, welcher geräuscharme Pulverlackbeschichtungen liefert. Außerdem betrifft die vorliegende Erfindung die Verwendung von pulverförmigen bevorzugt harten linearen Polyethylenwachsen zur Unterdrückung von Geräuschen bei der Gleitbeanspruchung von Pulverlackbeschichtungen.

Seit einigen Jahren finden sogenannte Pulverlacke ein immer größeres Einsatzgebiet. Pulverlacke liegen in Form eines trockenen Pulvers vor, das in der Regel mit Hilfe elektrostatischer Aufladung auf der Oberfläche des zu beschichtenden Gegenstandes fein verteilt aufgebracht und anschließend "getrocknet", d.h. eingebrannt wird. Beim Einbrennen, das üblicherweise bei Temperaturen zwischen 130 und 220 °C erfolgt, entsteht durch Vemetzungsreaktionen und Filmbildung der feste Lacküberzug oder die Pulverlackbeschichtungen auf dem Werkstück. Derartige Pulverlacke bieten eine Reihe von Vorteilen. So entfällt aufgrund der pulverförmigen Konsistenz des Lackes die Notwendigkeit, mit Lösemitteln zu arbeiten. Demgemäß entfallen bei Pulverlacken sämtliche Umweltprobleme, die üblicherweise mit dem Verdampfen der Lösemittel einhergehen._Zudem wird die sonst für das Verdampfen der Lösemittel notwendige Heizenergie eingespart. Ein weiterer Vorteil von Pulverlacken besteht darin, daß Material, das nicht am Werkstück haften geblieben ist, am Boden der Pulverkabine aufgefangen und problemlos erneut verwendet werden kann. Auf diese Weise kann ein Pulvernutzungsgrad von bis zu 98 % erreicht werden. Neben Kostenvorlteilen bringt dieser erhöhte Nutzungsgrad auch eine weitaus geringere Belastung der Umwelt als bei üblichen Lacken mit sich.

Pulverlacke werden aus Bindemitteln, Härtern, Füllstoffen, Pigmenten und Additiven hergestellt. Bezüglich der verwendeten Bindemittel und Härter basieren die heutigen Pulverlacke in der Regel auf einer der folgenden Polymerklassen: Epoxide; Polyester; Polyester/ Isocyanate (Polyurethane); oder Acrylate.

Problematisch bei der Anwendung von Pulverlacken ist jedoch das Erzielen einer Oberfläche mit hinreichend guten Eigenschaften. So treten in der Regel beim eingebrannten Pulverlackfilm erhebliche Störungen auf, die die Oberflächenglätte herabsetzen. Zu einem Teil resultieren diese Oberflächenstörungen aus der Tatsache, daß das unregelmäßig mit einer eigenen Struktur aufgebrachte Pulver des Lackes beim Einbrennen nicht ausreichend Zeit hat, während seiner flüssigen Phase (mit einem minimalen Wert der Viskosität) zu zerfließen und dabei die Oberfläche des Werkstückes gleichmäßig zu bedecken. Denn gleichzeitig mit dem Schmelzen und dem Erreichen des Viskositätsminimums beginnt die Vernetzung der Bindemittel und damit die Polymerisation des Lackes. Eine weitere wichtige Ursache für unregelmäßige Lackoberflächen ist die sogenannte Kraterbildung. In der Regel verursachen Verunreinigungen des Pulverlackes derartige Störungen.

Zur Verbesserung der Oberflächenglätte von Beschichtungen aus Pulverlack werden bereits seit längerem Verlaufmittel als Additive eingesetzt. Gleichzeitig sollen diese eine Unterdrückung von Kratem bewirken. Bevorzugt werden für diese Zwecke Acrylathetero- und Homopolymere im Molekulargewichtsbereich von Mw = 5 000 bis 200 000 eingesetzt. Typische Beispiele sind hierfür Acronal 4 F ® und Byk-360 P ® (Acronal 4 F ® ist eine Marke der BASF AG; Byk-360 P ® ist eine Marke der Firma. Byk-Mallinckrodt).
Acronal 4 F ® ist ein Polyacrylsäure-n-butylester. Laut Spezifikation ist dieses Additiv lösemittelfrei und hat nicht-flüchtige Anteile von weniger als 1,5% bei 30 min 140°C. Es ist ein schwer verseifbares, zähklebriges Weichharz mit ausgezeichneter Licht- und Alterungsbeständigkeit. Allein verwendet ergibt Acronal 4 F ® einen klebrigen Film von geringer Festigkeit.
Byk-360 P ® ist ein Acrylatpolymer aufgebracht auf eine spezielle Kieselsäure. Die Wirksübstanz ist mit 60% zu einem weißen, rieselfähigen Pulver compoundiert. Dieses Verlaufsadditiv ist ebenso wirksam in Pulverlacken auf Basis Epoxi, Acrylat, Polyester und Polyurethan. Es wird mit Harz, Härter und Pigmenten gemischt und dann mit allen Komponenten extrudiert.
Gelegentlich werden auch niedermolekulare Polyester verwendet.

Die erzielten Ergebnisse erfüllen indes noch nicht die an die Oberfläche gestellten Anforderungen.

Einen erheblichen Fortschritt haben zwar hier Polyvinylether, insbesondere Polyvinylethylether eines zahlenmittleren Molekulargewichts Mn von 1000 bis 2000 und eines massenmittleren Molekulargewichts Mw von 3000 bis 4000, mit sich gebracht.

Indes können auch diese Additive nicht die Geräusche, insbesondere die Quietsch- und Kratzgeräusche, unterdrücken oder völlig verhindern, welche sich bei der Gleitbeanspruchung von Pulverlackbeschichtungen häufig unangenehm bemerkbar machen. Diese Geräusche treten beispielsweise bei Gleitschienen auf, welche mit Pulverlacken beschichtet sind, wenn darin Gleitschlitten bewegt werden. Solche Gleitschienen werden beispielsweise bei Automobilkarosserien zur Halterung und Führung der Gieitschlitten der Fenster und der Sitze verwendet.

Aus der EP 0 750 024 sind z. B. Additivzubereitungen bekannt, die in Wachsen eingearbeitet werden. Die Herstellung quietscharmer Pulverlackbeschichtungen ist dort jedoch nicht beschneben.
Aus dem Stand der Technik ist auch der Einsatz von Wachs als Mahlhilfe bekannt. Hier wird das Wachs erst nach dem Extrudieren zugesetzt. D.h. das Wachs wird bei Temperaturen eingesetzt, die unter der Extrusionstemperatur des Pulverlacks liegen. Hierdurch wird aber das Wachs nicht homogen eingearbeitet, d. h kein integraler Bestandteil des Pulverlacks.

Pulverlacke enthaltend Wachse sind darüber hinaus auch aus den Dokumenten FR 2 235 988, WO 94/11446 und US 3,872,040 bekannt. Es werden in diesen Dokumenten jedoch keine harten und linearen Polyethylenwachse offenbart.

Die vorliegende Erfindung hat sich die Aufgabe gestellt, Pulverlacke bzw. Pulverlackbeschichtungen zur Verfügung zu stellen, die gegenüber dem Stand der Technik im Hinblick auf die oben genannten Anforderungen an die Geräuscharmut verbessert sind.

Diese Aufgabe wird erfindungsgemäß durch die Verwendung von pulverförmigem Polyethylenwachs gelöst, das in dem Pulverlack homogen verteilt ist. Hierbei ist bevorzugt, daß der Pulverlack herstellbar ist, in dem das Polyethylenwachs der Pulverlackmischung vor oder während der Extrusion des Pulverlacks derart zugesetzt wird, daß es homogen eingearbeitet wird. Der Pulverlack enthält 0,05 bis 5 Gew.%, vorzugsweise 0,5 bis 2 Gew.-% eines Polyethylens.
Das Polyethylenwachs ist hart und linear.

Das Wachs wird erfindungsgemäß nicht als Mahlhilfe nach der Extrusion eingesetzt, sondern derart eingearbeitet, daß es ein integraler Teil der Pulverlackrezeptur wird. Demgemäß erfolgt die Einarbeitung vorzugsweise durch Zugabe des Wachses vor oder während der Extrusion des Pulverlacks, d. h. gemeinsame Extrusion des Wachses und des Pulverlacks Die Extrusion an sich kann dabei nach den allgemein bekannten Methoden durchgeführt werden.

Das Wachs in der resultierenden Pulverlackierung bewirkt einen Glanzgrad der resultierenden, d.h. gehärteten Pulverlackierung, der einem leichten Mattierungseffekt entspricht. Diese Mattierung entspricht dabei vorteilhafterweise einem Glanzgrad von 30 bis 70 %, insbesondere 40 bis 60 %, gemessen unter einem Winkel von 60°.

Zur Herstellung eines Pulverlacks wird mindestens ein Polyethylenwachs homogen in dem Pulverlack verteilt. Es werden 0,05 bis 5 Gew.-%, vorzugsweise 0,5 bis 2 Gew.-% in den Pulverlack eingearbeitet. Vorzugsweise erfolgt die Einarbeitung des Polyethylenwachses bei Temperaturen, die ungefähr der Extrudertemperatur bei der Herstellung der Pulverlacke entsprechen. Bevorzugt ist demgemäß die Einarbeitung des Wachses bei der Extrusion des Pulverlacks. Gleichwohl sind erfindungsgemäß alle Methoden einsetzbar, die eine homogene Verteilung gewährleisten.

Bevorzugt ist, daß der Tropfpunkt der eingesetzten Wachse im Bereich der Extrudertemperatur bei der Pulverlackherstellung liegt. M. a. w. der Tropfpunkt entspricht ungefähr der Verarbeitungstemperatur der Pulverlackmischung im Extruder. Vorzugsweise liegt dieser zwischen 100 und 150°C, besonders bevorzugt 120 und 130°C. D. h. das Wachs weist einen Tropfpunkt auf, der ungefähr in dem Bereich liegt, die bei der Extrusion des Pulverlacks erzielt wird. Der Tropfpunkt kann aber auch über oder unterhalb der angegebenen Bereiche liegen. Besonders bevorzugt ist ein Tropfpunkt, der weniger als 10°C unter und maximal 25°C oberhalb der Extrudertemperatur liegt. Ganz besonders bevorzugt sind weniger als 5°C unter und maximal 10 °C oberhalb der Extrudertemperatur.
Das Wachs weist vorzugsweise eine Kornobergrenze von 1 bis 50, vorzugsweise 20 bis 30 µm auf Vorteilhafterweise liegt die mittlere Teilchengrößen (50 % - Wert) bei 6 bis 8 µm.

Dies gewährleistet ganz besonders, daß das Wachs homogen in den Pulverlack eingearbeitet wird (homogene Verteilung im Bindemittel). Infolgedessen beruht die Antiquietschwirkung nicht nur auf einer Oberflächenwirkung; Damit wird auch erreicht, daß das Wachs in den eingebrannten Pulverlackbeschichtungen homogen verteilt bleibt. Dadurch ist die Antiquietschwirkung dauerhaft, also auch nach einigen Jahren.

Die einsetzbaren Wachsen sind harte und lineare Polyethylenwachse. Vorteilhaft sind diese Wachse insbesondere deshalb, weil deren Verwendung in Kombination mit üblichen und bekannten Pulverlacken auf Basis von carboxylgruppenhaltigen Polyestern und niedermolekularen Epoxiden auf das toxikologisch bedenkliche Triglycidylisocyanurat (TGIC) als, niedermolekulares Epoxid generell verzichtet werden kann, ohne daß hierbei Nachteile in Kauf genommen werden müßten.

Als Pulverlacke kommen dabei alle bekannten Lackformulierungen in Frage, z.B. jene, die in der EP-509 392, EP-509 393, EP-322 827, EP-517 536, US-5,055,524 und US-4,849,283 beschrieben sind.

Insbesondere kann der Pulverlack bestehen aus Epoxidharzen, auch epoxidierten Novolaken, aus Vernetzungsmitteln, vorzugsweise phenolischen oder aminischen Härtern oder bicyclischen Guanidinen, Katalysatoren, Füllstoffen sowie ggf. Hilfsmitteln und Additiven.

Die erfindungsgemäß eingesetzten Pulverlacke enthalten vorzugsweise Epoxidharze, phenolische Vernetzungsmittel, Katalysatoren, Hilfsstoffe sowie ggf. Hilfsmittel und pulvertypische Additive und Rieselhilfen.

Geeignete Epoxidharze sind alle festen Epoxidharze mit einem Epoxiäquivalentgewicht zwischen 400 und 3.000 vorzugsweise 600 bis 2.000. Dabei handelt es sich hauptsächlich um Epoxidharze auf Basis von Bisphenol A und Bisphenol F. Bevorzugt werden epoxidierte Novolakharze. Diese weisen vorzugsweise ein Epoxidäquivalentgewicht von 500 bis 1.000 auf.

Die Epoxidharze auf Basis von Bisphenol A und Bisphenol F weisen im allgemeinen eine Funktionalität von kleiner 2, die epoxidierten Novolakharze eine Funktionalität von größer 2 auf. Besonders bevorzugt werden in den erfindungsgemäßen Pulverlacken epoxidierte Novolakharze mit einem mittleren Funktionalität im Bereich von 2,4 bis 2,8 und mit einem Epoxidäquivalentgewicht im Bereich von 600 bis 850. Bei den epoxidierten Novolakharzen sind die phenolischen Hydroxylgruppen mit Alkyl-, Acryl- oder ähnlichen Gruppen verethert. Durch Umsetzung der phenolischen Hydroxylgruppen mit Epichlorhydrinen werden Epoxidgruppen in das Molekül eingebracht. Ausgehend von Novolaken bildet sich dabei der sog. Epoxid-Novolak. Die epoxidierten Novolake sind strukturverwandt mit Bisphenol A-Harzen. Epoxidierte Novolakharze können hergestellt werden durch Epoxidierung von Novolaken, die z.B. aus 3 bis 4 Phenolkemen, welche über Methylenbrücken miteinander verbunden sind, bestehen. Als Novolakharze können auch alkylsubstituierte Phenole, welche mit Formaldehyd umgesetzt werden, verwendet werden.

Geeignete Epoxidharze sind beispielsweise die unter folgenden Namen im Handel erhältlichen Produkte:

Epikote 1004, 1055, 3003, 3004, 2017 der Firma Shell-Chemie, DER 640, 671, 662, 663U, 664, 667 der Firma Dow sowie Araldit GT 6063, 6064, 6084, 6097, 7004, 7220, 7225 der Firma Ciba Geigy.

Als epoxifunktionelles Bindemittel für die Pulverklarlacke sind beispielsweise epoxidgruppenhaltige Polyacrylatharze geeignet, die durch Copolymerisation vonmindestens einem ethylenisch ungesättigten Monomer, das mindestens eine

Epoxidgruppe im Molekül enthält, mit mindestens einem weiteren ethylenisch ungesättigten Monomer, das keine Epoxidgruppe im Molekül enthält, herstellbar sind, wobei mindestens eines der Monomere ein Ester der Acrylsäure oder Methacrylsäure ist.

Epoxidgruppenhaltige Polyacrylatharze sind bekannt (vgl. z.B. EP-A-299 420, DE-B-22 14 650, DE-B-27 49 576, US-A-4, 091,048 und US-A-3,781, 379).

Als Beispiele für die ethylenisch ungesättigte Monomere, die mindestens eine Epoxidgruppe im Molekül enthalten, werden Glycidylacrylat, Glycidylmethacrylat und Allylglycidylether genannt.

Als Beispiele für ethylenisch ungesättigte Monomere, die keine Epoxidgruppe im Molekül enthalten, werden Alkylester der Acryl- und Methacrylsäure, die 1 bis 20 Kohlenstoffatome im Alkylrest enthalten, insbesondere Methylacrylat, Methylmethacrylat, Ethylacrylat, Ethylmethacrylat, Butylacrylat, Butylmethylacrylat, 2-Ethylhexylacrylat und 2-Ethylhexylmethacrylat genannt. Weitere Beispiele für ethylenisch ungesättigte Monomere, die keine Epoxidgruppen im Molekül enthalten, sind Säuren, wie z.B. Acrylsäure und Methacrylsäure. Säureamide, wie z.B. Acrylsäure- und Methacrylsäureamid, vinylaromatische Verbindungen, wie Styrol, Methylstyrol und Vinyltoluol, Nitrile, wie Acrylnitril und Methacrylnitril, Vinyl- und Vinylidenhalogenide, wie Vinylchlorid und Vinylidenfluorid, Vinylester, wie z.B. Vinylacetat und hydroxylgruppenhaltige Monomere, wie z.B. Hydroxyethylacrylat und Hydroxyethylmethacrylat.

Das epoxidgruppenhaltige Polyacrylatharz weist üblicherweise ein Epoxidäquivalentgewicht von 400 bis 2.500, vorzugsweise 500 bis 1.500, besonders bevorzugt 600 bis 1.200, ein zahlenmittleres Molekulargewicht (gelpermeationschromatographisch unter Verwendung eines Polystyrolstandards bestimmt) von 1.000 bis 15.000, vorzugsweise von 1.200 bis 7.000, besonders bevorzugt von 1.500 bis 5.000 und eine Glasübergangstemperatur (TG) von 30 bis 80, vorzugsweise von 40 bis 70, besonders bevorzugt von 50 bis 70°C auf (gemessen mit Hilfe der differential scanning calometrie (DSC)).
Das epoxidgruppenhaltige Polyacrylatharz kann nach allgemein gut bekannten Methoden durch radikalische Polymerisation hergestellt werden.

Als Härter für das epoxidgruppenhaltige Polyacrylatharz geeignet sind beispielsweise Polyanhydride von Polycarbonsäuren oder von Mischungen aus Polycarbonsäuren, insbesondere Polyanhydride von Dicarbonsäuren oder von Mischungen aus Dicarbonsäuren.

Derartige Polyanhydride sind herstellbar, indem der Polycarbonsäure bzw. der Mischung aus Polycarbonsäuren Wasser entzogen wird, wobei jeweils zwei Carboxylgruppen zu einer Anhydridgruppe umgesetzt werden. Derartige Herstellungsverfahren sind gut bekannt und brauchen daher nicht näher erläutert zu werden.

Zur Aushärtung der Epoxidharze kann der erfindungsgemäße Pulverlack phenolische oder aminische Härter enthalten. Zum Einsatz kommen können auch bicyclische Guanidine.

Dabei kann beispielsweise jedes beliebige Phenolharz verwendet werden, solange es die für Reaktivität erforderliche Methylol-Funktionalität aufweist. Bevorzugte Phenolharze sind unter alkalischen Bedingungen hergestellte Reaktionsprodukte von Phenol, substituierten Phenolen und Bisphenol A mit Formaldehyd. Unter derartigen Bedingungen wird die Methylolgruppe entweder ortho- oder paraständig mit dem aromatischen Ring verknüpft. Besonders bevorzugt werden gemäß der vorliegenden Erfindung als phenolische Vernetzungsmittel hydroxylgruppenhaltige Bisphenol-A- oder Bisphenol-F-Harze mit einem Hydroxyäquivalentgewicht im Bereich von 180 bis 600, besonders bevorzugt im Bereich von 180 bis 300, eingesetzt. Derartige phenolische Vernetzungsmittel werden hergestellt durch Umsetzung von Bisphenol-A oder Bisphenol-F mit glycidylgruppenhaltigen Komponenten, wie z.B. dem Diglycidylether von Bisphenol-A. Derartige phenolische Vernetzungsmittel sind beispielsweise erhältlich unter der Handelsbezeichnung DEH 81, DEH 82 und DEH 87 der Firma Dow DX 171 der Firma Shell-Chemie und XB 3082 der Firma Ciba Geigy.

Die Epoxidharze und die phenolischen Vernetzungsmittel werden dabei in einem derartigen Verhältnis eingesetzt, daß die Zahl der Epoxidgruppen zur Zahl der phenolischen OH-Gruppen in etwa 1 : 1 beträgt.

Die erfindungsgemäßen Pulverlacke enthalten einen oder mehrere geeignete Katalysatoren für die Epoxidharz-Aushärtung. Geeignete Katalysatoren sind Phosphoniumsalze organischer oder anorganischer Säuren. Imidazol und Imidazolderivate, quartäre Ammoniumverbindungen sowie Amine. Die Katalysatoren werden im allgemeinen in Anteilen von 0,001 Gew.-% bis etwa 10 Gew.-%, bezogen auf das Gesamtgewicht des Epoxidharzes und des phenolischen Vemetzungsmittels, eingesetzt.

Beispiele für geeignete Phosphoniumsalz-Katalysatoren sind Ethyltriphenylphosphoniumiodid, Ethyltriphenylphosphoniumchlorid, Ethyltriphenylphosphoniumthiocyanat, Ethyltriphenylphosphonium-Acetat-Essigsäurekomplex, Tetrabutylphosphoniumiodid, Tetrabutylphosphoniumbromid und Tetrabutylphosphonium-Acetat-Essigsäurekomplex. Diese sowie weitere geeignete Phosphonium Katalysatoren sind z.B. beschrieben in US-PS 3, 477,990 und US-PS 3,341,580.

Geeignete Imidazol-Katalysatoren sind beispielsweise 2-Styrylimidazol, 1-Benzyl-2-methylimidazol, 2-Methylimidazol und 2-Butylimidazol. Diese sowie weitere Imidazol-Katalysatoren sind z.B. beschrieben in dem belgischen Patent Nr. 756,693.

Zum Teil enthalten handelsübliche phenolische Vernetzungsmittel bereits Katalysatoren für die Epoxidharz-Vernetzung.

Pulverlacke auf Basis Carboxylgruppen enthaltender Polyester und niedermolekularer, Epoxidgruppen enthaltender Vernetzungsmittel sind in großer Zahl bekannt und beispielsweise beschrieben in EP-A-389 926, EP-A-371 522, EP-A-326 230, EP-B-110 450, EP-A-110 451, EP-B-107 888, US 4.340,698, EP-B-119 164, WO 87/02043 und EP-B-10 805.

Insbesondere geeignet sind Pulverlacke, die als filmbildendes Material Carboxylgruppen enthaltende Polyester mit einer Säurezahl von 10 - 150 mg KOH/g und Epoxidharze mit einem Epoxidäquivalentgewicht von 350 - 2 000 enthalten.

Die verwendeten Carboxylgruppen enthaltenden Polyester weisen eine Säurezahl im Bereich von 10 - 150 mg KOH/g, bevorzugt im Bereich von 30 - 100 mg KOH/g, auf. Die Hydroxylzahl der Polyesterharze sollte ≤ 30 mg KOH/g betragen. Bevorzugt werden Polyester mit einer Carboxy-Funktionalität von ≥ 2 eingesetzt. Die Polyester werden nach den üblichen Methoden (vergleiche z.B. Houben Weyl, Methoden der Organischen Chemie, 4. Auflage, Band 14/2, Georg Thieme Verlag, Stuttgart 1961) hergestellt.

Als Carbonsäurekomponente zur Herstellung der Polyester sind aliphatische, cycloaliphatische und aromatische Di- und Polycarbonsäuren geeignet, wie z.B. Phthalsäure, Terephthalsäure, Isophthalsäure, Trimellitsäure, Pyromellitsäure, Adipinsäure, Bernsteinsäure, Glutarsäure, Pimelinsäure, Suberinsäure, Cyclohexandicarbonsäure, Acelainsäure, Sebacinsäure u.ä.. Diese Säuren können dabei auch in Form ihrer veresterungsfähigen Derivate (z.B. Anhydride) oder ihrer umesterungsfähigen Denvate (z.B. Dimethylester) eingesetzt werden.

Als Alkoholkomponente zur Herstellung der Carboxylgruppen enthaltenden Polyester A) sind die üblicherweise eingesetzten Di- und/oder Polyole geeignet, z.B. Ethylenglykol, Propandiol-1,2 und Propandiol-1,3, Butandiole, Diethylenglykol, Triethylenglykol, Tetraethylenglykol, Hexandiol-1,6, Neopentylglykol, 1,4-Dimethylolcyclohexan, Glycerin, Trimethylolethan, Trimethylolpropan, Pentaerythrit, Ditrimethylolpropan, Dipentaerythrit, Diglycerin u.ä..
Die so erhaltenen Polyester können dabei einzeln oder als Mischung verschiedener Polyester eingesetzt werden. Die als Komponente A) geeigneten Polyester haben im allgemeinen eine Glasübergangstemperatur oberhalb von 30°C.

Beispiele für geeignete handelsübliche Polyester sind die unter den folgenden Markennamen im Handel erhältlichen Produkte: Crylcoat 314, 340, 344, 2680, 316, 2625, 320, 342 und 2532 der Firma UCB, Drogenbos. Belgien; Grilesta 7205, 7215, 72-06, 72-08, 72-13, 72-14, 73-72, 73-93 und 7401 der Firma Ems-Chemie; Neocrest P670, P671, P672, P678, P662 der Firma ICI; Rearfree 6600 der Firma Resisa, Spanien; sowie Uralac P2400, Uralac P3400 und Uralac P5000 der Firma DSM.

Als saure Polyesterkomponente kommen auch ungesättigte, Carboxylgruppen enthaltende Polyesterharze in Frage. Diese werden erhalten durch Polykondensation, beispielsweise von Maleinsäure, Fumarsäure oder anderen aliphatischen oder cycloaliphatischen Dicarbonsäuren mit einer ethylenisch ungesättigten Doppelbindung, ggf. zusammen mit gesättigten Polycarbonsäuren, als Polycarbonsäurekomponente. Die ungesättigten Gruppen können auch durch die Alkoholkomponente, z.B. durch Trimethylolpropanmonoallylether, in den Polyester eingeführt werden.

Die Pulverlacke enthalten üblicherweise 50 bis 90 %, vorzugsweise 60 bis 80 Gew.-% Bindemittel und 10 bis 45 Gew.-%, vorzugsweise 20 bis 35 Gew.-% Füllstoffe.

Als Füllstoffe kommen z.B. glycidylgruppenfunktionalisierte kristalline Kieselsäuremodifikationen in Betracht. Ebenso können andere an sich bekannte Füllstoffe eingesetzt werden. Üblicherweise werden sie in dem genannten Bereich von 10 bis 45 Gew.-%, bezogen auf das Gesamtgewicht des Pulverlackes eingesetzt. In einigen Fällen sind jedoch auch Füllstoffanteile von mehr als 45 Gew.-% möglich.

Zu den kristallinen Kieselsaure-Modifikationen zählen Quarz, Cristobalit, Tridymit, Keatit, Stishovit, Melanophlogit, Coesit und faserige Kieselsäure. Die kristallinen Kieselsäure-Modifikationen sind bevorzugt glycidylgruppenfunktionalisiert, wobei die Glycidylgruppenfunktionalisierung durch eine Oberflächenbehandlung erzielt wird. Es handelt sich dabei beispielsweise um Kieselsäure-Modifikationen auf der Basis von Quarz, Cristobalit und Quarzgut, die hergestellt werden durch Behandlung der kristallinen Kieselsäure-Modifikationen mit Epoxisilanen. Vorteilhafterweise enthalten die Pulverlacke 10 bis 45 Gew.-%. bezogen auf das Gesamtgewicht des Pulverlackes, an glycidylgruppenfunktionalisierten kristallinen Kieselsäuremodifikationen.

Die Pulverlacke können zusätzlich oder alternativ weitere anorganische Füllstoffe, beispielsweise Titandioxid, Bariumsulfat oder Calciumcarbonat und Füllstoffe auf Silikatbasis, wie z.B. Talkum, Kaolin, Magnesium-, Aluminiumsilikate, Glimmer und ähnliche enthalten.

Außerdem können die Pulverlacke ggf, noch Hilfsmittel und Additive enthalten. Beispiele hierfür sind Verlaufsmittel, Rieselhilfen und Entgasungsmittel, wie beispielsweise Benzoin.

Die Herstellung der Pulverlacke erfolgt nach bekannten Methoden (vgl. z.B. Produkt-Information der Firma BASF Lacke + Farben AG, "Pulverlacke", 1990) durch Homogenisieren und Dispergieren, beispielsweise mittels eines Extruders, Schneckenkneters u.ä..Die Extrudertemperaturen liegen vorzugweise bei 100 °C bis 150 °C, besonders bevorzugt bei 120 bis 130 °C! Nach Herstellung der Pulverlacke werden diese durch Vermahlen und ggf. durch Sichten und Sieben auf die gewünschte Korngrößenverteilung eingestellt. Für das Vermahlen kann eine Mahlhilfe wie Aerosil verwendet werden.

Nach ihrer Herstellung werden die Pulverlacke auf die zu beschichtenden Substrate appliziert und eingebrannt.

Erfindungsgemäß ist es hierbei bevorzugt, daß hinsichtlich der Einbrenntemperatur (Objekttemperatur) und der Einbrennzeiten Grenzen eingehalten werden. Besonders hervorragende Ergebnisse werden erzielt, wenn bei einer Einbrenntemperatur von 180 °C eine Einbrennzeit von 15 min, bei einer Einbrenntemperatur von 190 °C eine Einbrennzeit von 11 min und bei einer Einbrenntemperatur von 200 °C eine Einbrennzeit von 4 min nicht überschritten wird. Bei den Beschichtungen, welche unter diesen Bedingungen hergestellt worden sind, stellen sich die gewünschten Effekte, die Freiheit von Quietsch- und Kratzgeräuschen bei der Gleitbeanspruchung, ganz besonders zuverlässig und sicher ein.

### Beispiel

### Die Herstellung eines geräuscharmen Pulverlacks

37 Gewichtsteile eines carboxylgruppenhaltigen Polyesters (Rearfree 6600 der Firma Resisa, Spanien), 35 Gewichtsteile Kreide, 19 Gewichtsteile eines Epoxidharzes (Araldit^{R} GT 6063 der Firma Ciba), 6 Gewichtsteile eines Verlaufmittels (Masterbatch auf der Basis eines Epoxidharzes, enthaltend das niedermolekulare Polyacrylatharz Acronal^{R} 4F Der Firma BASF Aktiengesellschaften; Epikote^{R} 3003-FCA-10 der Firma Shell AG, Deutschland), 1,6 Gewichtsteile eines harten linearen Polyethylenwachses eines Tropfpunktes zwischen 120 und 130 °C, einer Komobergrenze von 20 µm und einer mittleren Teilchengröße (50%-Wert) von 6 bis 8 µm und 0,8 Gewichtsteile Farbruß wurden vermischt und bei einer Temperatur von 120 bis 130 °C extrudiert. Das ausgetragene Extrudat wurde auf einer Pulvermühle vermahlen, wobei 0,8 Gewichtsteile Aerosil^{R} 380 als Mahlhilfe verwendet wurden.

Der resultierende Pulverlack wies die folgenden technologischen Eigenschaften auf:
Schmelzbereich (DSC-Methode): Tg₁ = 55 bis 65 °C;
Gelzeit (DIN 55990): 40 bis 45 s bei 200 °C;
Korngrößenverteilung (Sympatec Laser): <32 µm: 35 bis 50 %; > 90 µm: 0 bis 5 %;
Einbrennbedingungen ( Haltezeit bei Objekttemperatur): 10 min bei 180 °C;
Dichte (DIN 55990): 1,55 g/cm³;
Lagerstabilität bei Raumtemperatur: 24 Monate.

Der Pulverlack wurde zur Beschichtung der Gleitschienen von Fensterrahmen in Automobilkarosserien verwendet.

Die resultierenden Beschichtungen wiesen die folgenden technologischen Eigenschaften auf:
Film-Schichtdicke (DIN EN ISO 2178): 60 bis 80 µm;
Glanz (DIN 67530, 60 Grad Meßwinkel): 52 bis 58;
Haftung (Gitterschnitt DIN EN ISO 2409): GT 0;
Härte (Buchholz DIN 53153): > 80;
Biegung (DIN EN ISO 1519): ≤ 6;
Impact (ASTM D 2794): ≥ 4J;
Erichsentiefung (DIN EN ISO 1520): ≥ 5 mm;
Salzsprühtest (DIN 50021): 1.000 Stunden;
Schwitzwassertest (DIN 50017): 1.000 Stunden.

In die beschichteten Gleitschienen der Fensterrahmen wurden die Gleitschlitten mit den Fensterscheiben eingesetzt und mit Hilfe der üblichen und bekannten elektrischen Fensterheber bewegt. Hierbei traten selbst im Dauerbetrieb keinerlei Quietsch- und Kratzgeräusche auf.

## Patentansprüche

1. Verwendung von pulverförmigen Polyethylenwachsen, zur Unterdrückung von Geräuschen bei der Gleitbeanspruchung der resultierenden Pulverlackbeschichtungen, wobei die Polyethylenwachse hart und linear sind und wobei der Pulverlack 0,05 bis 5 Gew.-% Polyethylenwachs enthält.

2. Verwendung nach Anspruch 1, **dadurch gekennzeichnet, daß** das Polyethylenwachs homogen in dem Pulverlack verteilt ist.

3. Verwendung nach einem der Ansprüche 1 oder 2, **dadurch gekennzeichnet, daß** die Geräusche Quietschen und Kratzen sind.

4. Verwendung nach einem der Ansprüche 1 bis 3, **dadurch gekennzeichnet, daß** das Polyethylenwachs einen Tropfpunkt aufweist, der auf die Extrusionstemperatur bei der Herstellung des eingesetzten Pulverlackes abgestimmt ist.

5. Verwendung nach Anspruch 4, **dadurch gekennzeichnet, daß** der Tropfpunkt weniger als 10°C unter und maximal 25°C oberhalb der Extrudertemperatur bei der Herstellung des Pulverlacks liegt.

6. Verwendung nach einem der Ansprüche 1 bis 5, **dadurch gekennzeichnet, daß** das Polyethylenwachs einen Tropfpunkt zwischen 100 und 150°C, vorzugsweise 120 und 130°C aufweist.

7. Verwendung nach einem der Ansprüche 1 bis 6, **dadurch gekennzeichnet, daß** der Pulverlack 0,5 bis 2 Gew.-% Polyethylenwachs enthält.

## Claims

1. Use of pulverulent polyethylene waxes to suppress noises during the sliding stressing of the resultant powder coatings, the polyethylene waxes being hard and linear and the powder coating material containing from 0.05 to 5% by weight of polyethylene wax.

2. Use according to Claim 1, **characterized in that** the polyethylene wax is homogeneously distributed in the powder coating material.

3. Use according to one of Claims 1 and 2, **characterized in that** the noises are squeaking and scratching.

4. Use according to one of Claims 1 to 3, **characterized in that** the polyethylene wax has a dropping point harmonized with the extrusion temperature during the preparation of the powder coating material used.

5. Use according to Claim 4, **characterized in that** the dropping point is less than 10°C below and not more than 25°C above the extruder temperature during the preparation of the powder coating material.

6. Use according to one of Claims 1 to 5, **characterized in that** the polyethylene wax has a dropping point of between 100 and 150°C, preferably between 120 and 130°C.

7. Use according to one of Claims 1 to 6, **characterized in that** the powder coating material contains from 0.5 to 2% by weight, of polyethylene wax.

## Revendications

1. Utilisation de cires de polyéthylène pulvérulentes pour étouffer les bruits lorsque les revêtements de peinture en poudre résultants sont soumis à une contrainte de glissement, les cires de polyéthylène étant dures et linéaires et la peinture en poudre contenant de 0,05 à 5 % en poids de cire de polyéthylène.

2. Utilisation selon la revendication 1, **caractérisée en ce que** la cire de polyéthylène est répartie de façon homogène dans la peinture en poudre.

3. Utilisation selon la revendication 1 ou 2, **caractérisée en ce que** les bruits sont des crissements et des grattements.

4. Utilisation selon l'une quelconque des revendications 1 à 3, **caractérisée en ce que** la cire de polyéthylène présente un point de goutte qui est adapté à la température d'extrusion lors de la préparation de la peinture en poudre utilisée.

5. Utilisation selon la revendication 4, **caractérisée en ce que** le point de goutte est inférieur de moins de 10°C et supérieur au maximum de 25°C à la température de l'extrudeuse lors de la préparation de la peinture en poudre.

6. Utilisation selon l'une quelconque des revendications 1 à 5, **caractérisée en ce que** la cire de polyéthylène présente un point de goutte compris entre 100 et 150°C, de préférence entre 120 et 130°C.

7. Utilisation selon l'une quelconque des revendications 1 à 6, **caractérisée en ce que** la peinture en poudre contient de 0,5 à 2 % en poids de cire de polyéthylène.
